# EUROPEAN PATENT SPECIFICATION

(11) **EP 1 784 300 B1**
(45) Date of publication and mention of the grant of the patent: **23.05.2012**
(21) Application number: 04782634.2
(22) Date of filing: 31.08.2004
(51) Int. Cl.: B32B 1/08, B32B 27/34, B32B 27/36, C08F 283/00, C08F 283/02, C08F 20/52

(54) **POLYESTER-POLYAMIDE BLENDS HAVING LOW HAZE**
POLYESTER-POLYAMID-MISCHUNGEN MIT GERINGER TRÜBUNG
MELANGES POLYESTER-POLYAMIDE PRESENTANT UN FAIBLE TROUBLE

(43) Date of publication of application: 16.05.2007
(73) Proprietor: INVISTA Technologies S.à.r.l., 8001 Zürich (CH)
(72) Inventor: MEHTA, Sanjay, Spartanburg, SC 29301 (US); HILTNER, Phyllis Anne, Cleveland, OH 44120 (US); BAER, Eric, Cleveland Heights, OH 44106 (US)
(74) Representative: Cockerton, Bruce Roger
(86) International application number: PCT/US2004/028197
(87) International publication number: WO 2006/025827

(56) References cited:
- US-A- 5 985 389
- US-A1- 2004 013 833
- US-A1- 2004 146 750
- US-B1- 6 288 161
- US-B1- 6 500 895
- US-B2- 6 733 853
- US-B2- 6 740 376
- YOSHITSUGU MARUHASHI ET AL: "Transparency of Polymer Blends" POLYMER ENGINEERING & SCIENCE, WILEY, HOBOKEN, NJ, US, vol. 41, no. 11, 1 November 2001 (2001-11-01), pages 1987-1995, XP002385265 ISSN: 0032-3888

## Description

### BACKGROUND OF THE INVENTION

### 1) Field of the invention

The invention relates to blends of polyamides in polyesters, a method for forming such compositions, and to containers made from such compositions. Specifically the compositions have less haze and transparency than previous blends. The blends can be used as passive gas barriers, and/or active oxygen scavengers with the addition of a transition metal catalyst. The invention seeks to obtain balanced refractive indices for the polyamides / polyester compositions. A method to blend the copolyester and polyamides and orient the blend to minimize the haze, thereby forming an oriented article, is also described and claimed.

### 2) Prior Art

Plastic materials have been replacing glass and metal packaging materials due to their lighter weight, decreased breakage compared to glass and potentially lower cost. One major deficiency with polyesters is its relatively high gas permeability. This restricts the shelf life of carbonated soft drinks and oxygen sensitive materials such as beer and fruit juices.

Multilayer bottles containing a low gas permeable polymer (such as polyamide) as an inner layer, with polyesters as the other layers have been commercialized. Blends of these low gas permeable polymers into polyester have not been successful due to haze formed by the domains in the two-phase system. The preferred polyamide is a partially aromatic polyamide containing meta-xylylene groups, especially poly (m-xylylene adipamide), known in the trade as MXD6.

The MXD6 bulletin (TR No. 0009-E) from Mitsubishi Gas Chemical Company, Inc., Tokyo Japan, clearly shows that the haze of a multilayer bottle containing a layer of 5 wt-% MXD6 is ~1%, compared to 15% haze for a uniform blend of the same 5wt-%.

Thus the use of partially aromatic polyamides as the low gas permeable polymer gives an unacceptable increase in the haze of the resultant container.

US Pat. No. 4,501,781 to Kushida et al. discloses a hollow blow-molded biaxially oriented bottle shaped container comprising a mixture of polyethylene terephthalate (PET) resin and a xylylene group-containing polyamide resin. Both monolayer and multilayer containers are disclosed, but there is no information on the haze of the bottles.

US Pat. No. 5,650,469 to Long et al. discloses the use of a terephthalic acid based polyester blended with low levels (0.05 to 2.0 wt-%) of a polyamide to reduce the acetaldehyde level of the container. These blends produced lower yellowness containers than a corresponding blend made from a dimethyl terephthalate based polyester, but are still unsatisfactory for the higher levels required to significantly lower the gas permeability.

US Pat. Nos. 5,258,233, 5,266,413 and 5,340,884 to Mills et al. discloses a polyester composition comprising 0.05 to 2.0 wt-% of low molecular weight polyamide. At a 0.5 wt-% blend of MXD6 the haze of the bottle increased from 0.7 (polyester without MXD6) to 1.2% (polyester with MXD6). No gas permeation is given.

US Pat. No. 4,837115 to Igarashi et al. discloses a blend of amino terminated polyamides with PET to reduce acetaldehyde levels. There was no increase in haze with the addition of 0.5 wt-% MXD6, but at 2 wt-% the haze increased from 1.7 to 2.4%. No gas permeation data is given.

US Pat. No. 6,239,233 to Bell et al. discloses a blend of acid terminated polyamides with PET that has reduced yellowness compared to amino terminated polyamides. No gas permeation or haze data is given.

US Pat. No. 6,346,307 to Al Ghatta et al. discloses the use of a dianhydride of a tetracarboxylic acid to reduce the dispersed domain size of a blend of MXD6 in PET. The examples did not give color data, but at a 10 wt-% MXD6 blend level the oxygen permeability was reduced from 0.53 to 0.12 ml/bottle/day/atm and the carbon dioxide permeability was reduced from 18.2 to 7.02 ml/bottle/day/atm.

US Pat. No. 6,444,283 to Turner et al. discloses that low molecular weight MXD6 polyamides have lower haze than higher molecular weight MXD6 when blended with PET. At a 2 wt-% MXD6 (Mitsubishi Chemical Company grade 6007) the oxygen permeability of an oriented film was reduced from 8.1 to 5.7 cc-mil/100 in² -atm-day compared to 6.1 for the low molecular weight MXD6.

US Pat. No. 4,957,980 to Koyayashi et al. discloses the use of maleic anhydride grafted copolyesters to compatibilize polyester-MXD6 blends.

US Pat. No. 4,499,262 to Fagerburg et al. discloses sulfo-modified polyesters that give an improved rate of acetaldehyde generation and a lower critical planar stretch ratio. Blends with polyamides were not discussed.

Japanese Pat. No. 2663578 B2 to Katsumasa et al. discloses the use of 0.5 to 10 mole % 5-sulfoisophthalate copolymers as compatibilizer of polyester-MXD6 blends. No haze data was given.

The use of a transition metal catalyst to promote oxygen scavenging in polyamide multilayer containers, and blends with PET, has been disclosed in the following patents, for example.

US Pat. Nos. 5,021,515, 5,639,815 and 5,955,527 to Cochran et al. disclose the use of a cobalt salt as the preferred transition metal catalyst and MXD6 as the preferred polyamide. There is no data on the haze of the polyamide blends.

US Pat. Nos. 5,281,360 and 5,866,649 to Hong, and US Pat. No. 6,288,161 to Kim discloses blends of MXD6 with PET and a cobalt salt catalyst. There is no data on the haze of the polyamide blends.

US Pat. Application 2003/0134966 Al to Kim et al. discloses the use of cobalt octoate and xylene group-containing polyamides for use in multi-layer extrusion blow-molding for improved clarity. Extrusion blow-molding minimizes the orientation of the polyamide domain size compared to injection stretch blow molding containers. No haze data is given.

US Pat. No. 4,551,368 to Smith et al. discloses melt blends of poly(ethylene isophthalate) (PEI) with PET for improved gas barrier properties. No data on the transparency or haze of the films and containers was given.

US Pat. No. 4,578,295 to Jabarin discloses a blend of PET with a copolyester of isophthalic and terephthalic acid with ethylene glycol and 1,3 bis(2-hydroxyethoxy)benzene. These blends gave articles with improved gas barrier, but no data was given on the transparency of the articles.

US Pat. Nos. 5,912,307, 6,011,132, 6,107,445, 6,121,407 and 6,262,220 to Paschke et al. disclose copolyesters of PET with isophthalic acid and/or 2,6 naphthalene dicarboxylic acid. Articles made from these copolyesters had a high density and improved gas barrier properties. No data was given on the transparency of the films or bottles.

US Pat. No. 6,476,180 to Kapur et al. discloses biaxially oriented articles formed from block copolyesters of PET and PEI. No data was given on the transparency of the articles.

US 2004/0013833 describes compatibilized polymer blends comprising polyester, polyamide and a compatibilizer. Such compatibilized polymer blends may be fabricated into monolayer or multilayer preforms and/or containers. Containers comprising such blends exhibit good gas barrier properties against gases such as oxygen and carbon 5 dioxide, have a good appearance and may be used as containers for a wide variety of consumer products, including beverages, edibles and cosmetics.

There is a need for an improved gas barrier polyester composition that can be injection stretch blow molded as a monolayer container that has reduced haze. This is particularly required for containers that require a long shelf life, such as beer and other oxygen sensitive materials. None of these patents discloses how this balance of properties can be achieved.

### SUMMARY OF THE INVENTION

The present invention is an improvement over polyester/polyamide blends known in the art in that these compositions have reduced haze.

In the broadest sense the present invention comprises an oriented article of a blend of a copolyester and a partially aromatic polyamide in which the oriented refractive indices are closely matched.

The broadest scope of the present invention also comprises an oriented container that has both active and/or passive oxygen barrier, and carbon dioxide barrier properties at an improved color and clarity than containers known in the art.

In the broadest sense the present invention is a method to blend the copolyester and polyamides and orient the blend to minimize the haze, thereby forming an oriented article.

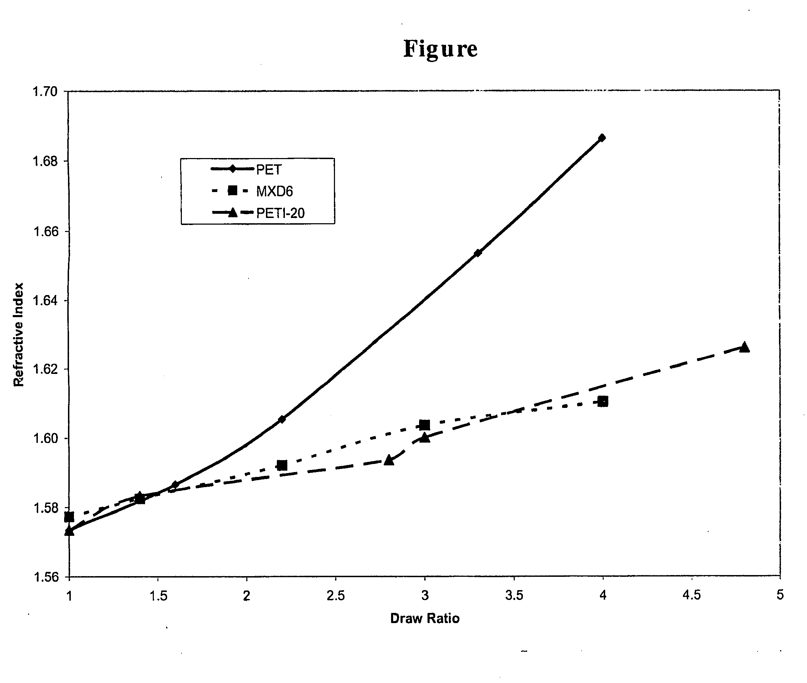

### BRIEF DESCRIPTION OF THE DRAWING

The drawing is to aid in the understanding of the invention. It is not meant to limit the scope of the invention nor the claims in any manner beyond what the claims specify.

The figure is a graph of refractive index vs. oriented draw ratio.

### DETAILED DESCRIPTION OF THE INVENTION

The haze of an immiscible blend of two polymers in an oriented article is the result of light scattering by the domains of the discontinuous phase. The amount of haze depends on the size of the domain and the magnitude of the mismatch in refractive index between the two phases.

Previous attempts to reduce haze in the oriented article have been directed at the use of compatibilizers to reduce domain size. This invention relates to the minimization of the refractive index between the two phases.

Quenched isotropic blends of PET and MXD6 have low haze because their refractive indices match closely. However, haze increase on orientation because orientation changes the refractive index of PET and MXD6 differently. In order to achieve low haze, the refractive indices of the blend components of the oriented article should be matched. The refractive index in the parallel direction is affected more by orientation than the refractive index in the perpendicular direction. Thus the research was focused on matching the refractive index in the parallel direction. This can be achieved by changing the composition, through copolymerization, of either the polyester or polyamide. To obtain a match either the refractive index of the oriented polyamide constituent is increased, or the refractive index of the oriented polyester decreased.

Generally polyesters can be prepared by one of two processes, namely: (1) the ester process and (2) the acid process. The ester process is where a dicarboxylic ester (such as dimethyl terephthalate) is reacted with ethylene glycol or other diol in an ester interchange reaction. Because the reaction is reversible, it is generally necessary to remove the alcohol (methanol when dimethyl terephthalate is employed) to completely convert the raw materials into monomers. Certain catalysts are well known for use in the ester interchange reaction. In the past, catalytic activity was then sequestered by introducing a phosphorus compound, for example polyphosphoric acid, at the end of the ester interchange reaction. Primarily the ester interchange catalyst was sequestered to prevent yellowness from occurring in the polymer.

Then the monomer undergoes polycondensation and the catalyst employed in this reaction is generally an antimony, germanium or titanium compound, or a mixture of these.

In the second method for making polyester, an acid (such as terephthalic acid) is reacted with a diol (such as ethylene glycol) by a direct esterification reaction producing monomer and water. This reaction is also reversible like the ester process and thus to drive the reaction to completion one must remove the water. The direct esterification step does not require a catalyst. The monomer then undergoes polycondensation to form polyester just as in the ester process, and the catalyst and conditions employed are generally the same as those for the ester process.

For most container applications this melt phase polyester is further polymerized to a higher molecular weight by solid state polymerization.

In summary, in the ester process there are two steps, namely: (1) an ester interchange, and (2) polycondensation. In the acid process there are also two steps, namely: (1) direct esterification, and (2) polycondensation.

Suitable polyesters are produced from the reaction of a diacid or diester component comprising at least 65 mol- % terephthalic acid or C₁ - C₄ dialkylterephthalate, preferably at least 70 mol- %, more preferably at least 75 mol- %, even more preferably, at least 95 mol- %, and a diol component comprising at least 65% mol-% ethylene glycol, preferably at least 70 mol- %, more preferably at least 75 mol- %, even more preferably at least 95 mol- %. It is also preferable that the diacid component is terephthalic acid and the diol component is ethylene glycol, thereby forming polyethylene terephthalate (PET). The mole percent for all the diacid component totals 100 mol- %, and the mole percentage for all the diol component totals 100 mol- %.

Where the polyester components are modified by one or more diol components other than ethylene glycol, suitable diol components of the described polyester may be selected from 1, 4-cyclohexandedimethanol; 1,2-propanediol; 1, 4-butanediol; 2,2-dimethyl-1, 3-propanediol; 2-methyl -1, 3-propanediol (2MPDO); 1,6-hexanediol; 1,2-cyclohexanediol; 1,4-cyclohexanediol; 1,2-cyclohexanedimethanol; 1,3-cyclohexanedimethanol, and diols containing one or more oxygen atoms in the chain, e.g., diethylene glycol, triethylene glycol, dipropylene glycol, tripropylene glycol or mixtures of these, and the like. In general, these diols contain 2 to 18, preferably 2 to 8 carbon atoms. Cycloaliphatic diols can be employed in their cis or trans configuration or as mixture of both forms. Preferred modifying diol components are 1,4-cyclohexanedimethanol or diethylene glycol, or a mixture of these.

Where the polyester components are modified by one or more acid components other than terephthalic acid, the suitable acid components (aliphatic, alicyclic, or aromatic dicarboxylic acids) of the linear polyester may be selected, for example, from isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid, bibenzoic acid, or mixtures of these and the like. In the polymer preparation, it is often preferable to use a functional acid derivative thereof such as the dimethyl, diethyl, or dipropyl ester of the dicarboxylic acid. The anhydrides or acid halides of these acids also may be employed where practical. These acid modifiers generally retard the crystallization rate compared to terephthalic acid.

Also particularly contemplated by the present invention is a block copolyester made by melt blending poly(ethylene terephthalate) and poly(ethylene isophthalate).

In addition to polyester made from terephthalic acid (or dimethyl terephthalate) and ethylene glycol, or a modified polyester as stated above, the present invention also includes the use of 100% of an aromatic diacid such as 2, 6-naphthalene dicarboxylic acid or bibenzoic acid, or their diesters, and a modified polyester made by reacting at least 85 mol- % of the dicarboxylate from these aromatic diacids/diesters with any of the above comonomers.

Preferably the polyamide used as the gas barrier component of the blend is selected from the group of partially aromatic polyamides is which the amide linkage contains at least one aromatic ring and a nonaromatic species. Preferred partially aromatic polyamides include: poly(m-xylylene adipamide), poly(hexamethylene isophthalamide), poly(hexamethylene adipamide-co-isophthalamide), poly(hexamethylene adipamide-co-terephthalamide), and poly(hexamethylene isophthalamide-co-terephthalamide). The most preferred is poly(m-xylylene adipamide).

The polyamides are generally prepared by melt phase polymerization from a diacid-diamine complex (salt) which may be prepared either in situ or in a separate step. In either method, the diacid and diamine are used as starting materials. Alternatively, an ester form of the diacid may be used, preferably the dimethyl ester. If the ester is used, the reaction must be carried out at a relatively low temperature, generally 80° to 120° C., until the ester is converted to an amide. When the diacid diamine complex is used, the mixture is heated to melting and stirred until equilibration. The polymerization can be carried out either at atmospheric pressure or at elevated pressures.

The preferred range of polyamide is 1 to 10 wt. % based on the weight of the container, depending on the required gas barrier required for the container.

The ionic compatibilizer is preferably a copolyester containing a metal sulfonate group. The metal ion of the sulfonate salt may be Na+, Li+, K+, Zn++, Mn++, Ca++ and the like. The sulfonate salt group is attached to an aromatic acid nucleus such as a benzene, naphthalene, diphenyl, oxydiphenyl, sulfonyldiphenyl, or methylenediphenyl nucleus.

Preferably, the sulfomonomer is sulfophthalic acid, sulfoterephthalic acid, sulfoisophthalic acid, 4-sulfonaphthalene-2,7-dicarboxylic acid, and their esters. Most preferably, the sulfomonomer is 5-sodiumsulfoisophthalic acid or 5-zincsulfoisophthalic acid and most preferably their dialkyl esters such as the dimethyl ester (SIM) and glycol ester (SIPEG). The preferred range of 5-sodiumsulfoisophthalic or 5-zincsulfoisophthalic acid to reduce the haze of the container is 0.1 to 2.0 mol-%.

Suitable cobalt compounds for use with the present invention include cobalt acetate, cobalt carbonate, cobalt chloride, cobalt hydroxide, cobalt naphthenate, cobalt oleate, cobalt linoleate, cobalt octoate, cobalt stearate, cobalt nitrate, cobalt phosphate, cobalt sulfate, and cobalt (ethylene glycolate), among others. As a transition metal catalyst for active oxygen scavenging, a salt of a long chain fatty acid is preferred, cobalt octoate or stearate being the most preferred. For color control of passive gas barrier blends any cobalt compound can be used, with cobalt acetate being preferred.

Although not required, additives may be used in the polyester/polyamide blend. Conventional known additives include, but are not limited to an additive of a dye, pigment, filler, branching agent, reheat agent, anti-blocking agent, antioxidant, anti-static agent, biocide, blowing agent, coupling agent, flame retardant, heat stabilizer, impact modifier, UV and visible light stabilizer, crystallization aid, lubricant, plasticizer, processing aid, acetaldehyde and other scavengers, and slip agent, or a mixture thereof.

The blend of polyester, ionic compatibilizer, cobalt salt and partially aromatic polyamide is conveniently prepared by adding the components to an extruder machine that extrudes the molten components through a slot to produce an unoriented article such a film, or the molten components are injected into an injection molding machine to produce a preform. Either the extruded film or the injection molded preform can be oriented into a film or container respectively.

For oriented film, the extruder extrudes the molten polymer blend through a rectangular slot, which is quickly cooled to produce an unoriented film. Preferably the blend is introduced into the throat of the extruder such that the blend is uniform, but has had little reaction time between the components, especially when the desired article is an active gas barrier. Once the components are blended, the gas barrier properties become "active" and the length of the shelf life of the article has begun. The unoriented film can be uniaxially oriented or biaxially oriented by stretching it in one or both directions of the film. Such processes for making oriented film are well known.

For an oriented container, the extruder injects the molten polymer into an injection molding apparatus that forms a preform. Preferably the blend is introduced into the throat of the injection molding apparatus to maximize the shelf life of an "active" gas barrier article. Then the preform is stretch blow molded into the shape of the container. Stretch blow molding orients the polymer blend both axially and length wise.

If a conventional polyester base resin designed for polyester films or containers is used, then one method is to prepare a master batch of a polyester containing the ionic compatibilizer, and optionally a transition metal catalyst for active scavenging, together with the partially aromatic polyamide using a gravimetric feeder for the three components. Alternatively the polyester resin can be polymerized with the ionic compatibilizer, and optionally a transition metal catalyst for active scavenging, to form a copolymer. This copolymer can be mixed with the partially aromatic nylon at the extruder. Alternatively all the blend components can be blended together, or as a blend of master batches, and fed directly as a single material to the extruder. The mixing section of the extruder should be of a design to produce a homogeneous blend. This can be determined by measuring the thermal properties of the preform or unoriented film, and observing a single glass transition temperature in contrast to two separate glass transition temperatures of the partially aromatic polyamide and polyester.

These process steps work well for forming oriented film or carbonated soft drink, water or beer bottles, and containers for hot fill applications, for example. The present invention can be employed in any of the conventional known processes for producing polyester films or containers.

### TESTING PROCEDURES

### 1. Oxygen and Carbon Dioxide Permeability of films, passive

Oxygen flux of film samples, at a given percent relative humidity (RH), at one atmosphere pressure, and at 25°C was measured with a Mocon Ox-Tran model 2/20 (MOCON Minneapolis, MN). A mixture of 98% nitrogen with 2% hydrogen was used as the carrier gas, and 100% oxygen was used as the test gas. Prior to testing, specimens were conditioned in nitrogen inside the unit for a minimum of twenty-four hours to remove traces of atmospheric oxygen dissolved in the PET matrix. The conditioning was continued until a steady base line was obtained where the oxygen flux changed by less than one percent for a thirty-minute cycle. Subsequently, oxygen was introduced to the test cell. The test ended when the flux reached a steady state where the oxygen flux changed by less than 1% during a 30 minute test cycle. Calculation of the oxygen permeability was done according to a literature method for permeation coefficients for PET copolymers, from Fick's second law of diffusion with appropriate boundary conditions. The literature documents are: Sekelik et al., Journal of Polymer Science Part B: Polymer Physics, 1999, Volume 37, Pages 847-857. The second literature document is Qureshi et al., Journal of Polymer Science Part B: Polymer Physics, 2000, Volume 38, Pages 1679-1686. The third literature document is Polyakova, et al., Journal of Polymer Science Part B: Polymer Physics, 2001, Volume 39, Pages 1889-1899.

The carbon dioxide permeability of films was measured in the same manner, replacing the oxygen gas with carbon dioxide and using the Mocon Permatran-C 4/40 instrument.

All film permeability values are reported in units of (cc(STP).cm)/(m².atm.day)).

### 2. Transparency

The percent transmittance of the films and bottle sidewalls was measured in accordance to ASTM D1746 with a UV-Vis spectrometer at 630 nm at 23 °C.

### 3. Color and Haze

The haze of the prefonn and bottle walls was measured with a Hunter Lab ColorQuest II instrument. D65 illuminant was used with a CIE 1964 10° standard observer. The haze is defined as the percent of the CIE Y diffuse transmittance to the CIE Y total transmission. The color of the preform and bottle walls was measured with the same instrument and is reported using the CIELAB color scale, L* is a measure of brightness, a* is a measure of redness (+) or greenness (-) and b* is a measure of yellowness (+) or blueness (-).

### 4. Refractive Index

The refractive indices of the films were measured with the Metricon 2010 prism coupler at 632.8 nm and 23 °C and 43% RH.

### 5. Morphology

Blend morphology was examined with atomic force microscopy (AFM) using the Nanoscope IIIa MultiMode head from Digital Instruments (Santa Barbara, CA) in the tapping mode. Specimens were microtomed at ambient temperature to expose the bulk morphology.

### 6. Blends

The polyester and polyamide pellets were dried at 120°C for 48 hr in vacuo before blending. The pellets were dry blended and extruded in a Haake Rheomex TW-100 twin screw extruder with partially intermeshing, counter rotating, conical screws with converging axes. The average screw diameter was 25.4 mm and the average L/D ratio was 13/1. The barrel temperature of 285°C and screw speed of 15 rpm were used. The melted blends were extruded through a 3 mm die, quenched in air and pelletized.

### 7. Preform and bottle process

After solid state polymerization, the resin of the present invention is typically, dried for 4 - 6 hours at 170 - 180° C, melted and extruded into preforms. Each preform for a 0.59 liter soft drink bottle, for example, employs about 24 grams of the resin. The preform is then heated to about 100 - 120°C and blown-molded into a 0.59 liter contour bottle at a stretch ratio of about 12.5. The stretch ratio is the stretch in the radial direction times the stretch in the length (axial) direction. Thus if a preform is blown into a bottle, it may be stretched about two times its length and stretched about six times is diameter giving a stretch ratio of twelve (2 x 6). Since the bottle size is fixed, different preform sizes can be used for obtaining different stretch ratios. For larger bottles, for instance 2-liter, the bottle wall draw ratio is typically 2.5 x 4.0 (axial x hoop).

### 8. Films

The polyester and polyamide pellets were dried in vacuo for 48 h at 80 °C and compression molded between Kapton sheets in a press at 270 °C to obtain films 180 to 200 µm thick. The platens were heated in the press for 4 min with repeated application and release of pressure to remove air bubbles, and held at 309 psi (2.1 MPa) for an additional 4 min. Films were quenched from the isotropic melt into ice water. Quenched films were used for characterization unless otherwise indicated. Compression-molded films were conditioned at 43% relative humidity (RH) and uniaxially or sequentially biaxially stretched in the environmental chamber of an Instron machine at a rate of 20%. For uniaxial orientation, the compression-molded film (15 cm wide, 4 cm long and 0.040 cm thick) was stretched uniaxially at 75 °C to draw ratio of 4. For sequential biaxial orientation, the compression-molded film (15 cm wide, 4 cm long and 0.060 cm thick) was stretched uniaxially at 75 °C to draw ratio of 4, remounted in the grips at 90° to the first stretch and stretched again at 78 °C to achieve a final balanced biaxial draw ratio of 2.7×2.7. Grids were marked in the specimen for measuring the draw ratio. After drawing, the film was rapidly cooled to ambient temperature. The film thickness after uniaxial and biaxial orientation is 0.010 and 0.009 cm, respectively.

The following examples are given to illustrate the present invention, and it shall be understood that these examples are for the purposes of illustration and are not intended to limit the scope of the invention.

### EXAMPLES

Polyester homopolymers and copolymers were prepared by standard methods using the dimethyl ester of the acid components. The homopolymers were solid state polymerized to their final molecular weight. The nomenclature and properties of these polyesters is set forth in Table 1.

**Table 1**

| **Designation** | **Diacid component (mole %)** |
|---|---|
| PET | Terephthalic (100 %) |
| PEI | Isophthalic (100 %) |
| PETS | Terephthalic (97.7%), 5-sulfoisophthalic (2.3 %) |
| PETI-7 | Terephthalic (93 %), Isophthalic (7 %) |
| PETI-20 | Terephthalic (80 %), Isophthalic (20 %) |
| PETI-30 | Terephthalic (70 %), Isophthalic (30 %) |

Block copolymers of PET and PEI were prepared by the following procedure. PET and PEI pellets were dried at 120 °C and 50° C respectively for 48 hr in vacuo and were dry mixed in compositions of 15-30% PEI by weight and were extruded in a DACA twin screw extruder with partially co-rotating and self-wiping conical screws. The screw diameter has a diameter of 13.75 mm and is 108 mm long. A barrel temperature of 270°C and screw speed of 100 rpm were used for these extrusions. A residence time of approximately 2 min was used; the molten blends were extruded through a 2 mm die and pelletized. The nomenclature of these block copolyesters is set forth in Table 2.

**Table 2**

| **Designation** | **Diacid component (mole %)** |
|---|---|
| PETI-15B | Terephthalic (85 %), Isophthalic (15 %) |
| PETI-20B | Terephthalic (80 %), Isophthalic (20 %) |
| PETI-25B | Terephthalic (75 %), Isophthalic (25 %) |
| PETI-30B | Terephthalic (70 %), Isophthalic (30 %) |

Partially aromatic polyamides were prepared by standard methods, unless they were commercially available as noted. The nomenclature, composition and properties are set forth in Table 3.

**Table 3**

| **Designation** | **Diamine (mole %)** | **Diacid (mole %)** |
|---|---|---|
| MXD6 | m-xylylene (100 %) | Adipic (100 %) |
| 6IT | Hexamethylene (100 %) | Isophthalic (67 %), terephthalic acid (33 %) |
| 616,9 | Hexamethylene (100 %) | Isophthalic (29 %), adipic acid (42 %), azelaic (29 %) |
| MXD6I-12 | m-xylylene (100 %) | Isophthalic (12 %), adipic (88 %) |

| | | |
|---|---|---|
| MXD6 was supplied by Mitsubishi Gas Chemical America (NY) 6IT and 616,9 were supplied by EMS Chemie (Sumter SC) | | |

### Example 1

Blends of 75 wt-% PET, 15 wt-% PETS and 10 wt-% of different polyamides were prepared. The refractive index and transparency of the isotropic films (0.2 mm thick) are set forth in table 4, and compared to a PET control (100 % PET).

**Table 4**

| Materials | RI | ΔRI (PA-PET) | Transparency |
|---|---|---|---|
| PET control | 1.5735 | - | 92 |
| MXD6 blend | 1.5773 | 0.0038 | 90 |
| 6I6,9 blend | 1.5656 | -0.0079 | 90 |
| 6IT blend | 1.5864 | 0.0129 | 86 |

The close match of the refractive index of PET and MXD6 resulted in comparable film transparency. Increasing the aromaticity of the polyamide (6IT) increased its refractive index resulting in a loss of transparency.

These films were uniaxially oriented to a draw ratio of 4X. The transparency was measured in polarized and unpolarized light and the results set forth in Table 5.

**Table 5**

| Materials | Unpolarized light | Polarized light | |
|---|---|---|---|
| | | // orientation | ⊥ orientation |
| | T% | T% | T% |
| PET control | 89 | 89 | 89 |
| MXD6 blend | 66 | 46 | 81 |
| 6I6,9 blend | 65 | 46 | 78 |
| 6IT blend | 45 | 34 | 58 |

Polarized light shows that the loss in orientation was dominantly due to the loss in the direction parallel to the orientation direction.

The results of uniaxially drawing the film at a series of draw ratios showed that stretching increased the refractive index in the orientation direction and decreased the refractive index in the traverse direction. The absolute change in refractive index with draw ratio was much greater than that of the partially aromatic polyamides. This increased the mismatch in refractive index causing a loss in transparency.

The transparency of the sequentially biaxially oriented MXD6 blend is compared to PET in Table 6. This again illustrates the loss in transparency due to the mismatch of refractive indices between the polyamide domain and the PET continuous phase.

**Table 6**

| Material | Unpolarized light | Polarized light | |
|---|---|---|---|
| | | ┴ 1^{st} draw | // 1^{st} draw |
| | T% | T% | T% |
| PET control | 89 | 88 | 91 |
| MXD6 blend | 70 | 66 | 72 |

The particle size of the MXD6 domains in the isotropic film was 0.1 to 0.3 µm. A blend of 90 wt-% PETS and 10 wt-% MXD6 showed a decreased domain size of 0.05 to 0.18 µm. However, due to the close match in refractive indices between MXD6 and PET in the isotropic state there was not a difference in transparency due to the smaller domains.

### Example 2

Blends of 75 wt-% PET, 15 wt-% PETS and 10 wt-% of MXD6 and MXD6I-12 were prepared. Isotropic, biaxially oriented films and 2 liter bottles prepared. The oxygen permeability at 0% RH was measured and the results set forth in Table 7. The PET control is 100 % PET.

**Table 7**

| Material | O₂ Permeability (cc(STP).cm)/(m².atm.day)) | | |
|---|---|---|---|
| | Isotropic | Biaxially Oriented | Bottle sidewall |
| PET control | 0.363 | 0.253 | 0.180 |
| MXD6 blend | 0.295 | 0.078 | 0.063 |
| MXD6I-12 blend | 0.282 | 0.104 | 0.081 |

The carbon dioxide permeability at 0% RH for the same film samples was measured and the results set forth in Table 8.

**Table 8**

| Material | CO₂ Permeability (cc(STP).cm)/(m².atm.day)) | |
|---|---|---|
| | Isotropic | Biaxially Oriented |
| PET control | 0.363 | 0.253 |
| MXD6 blend | 0.295 | 0.078 |
| MXD6I-12 blend | 0.282 | 0.104 |

For both oxygen and carbon dioxide permeability, MXD6 reduced the permeability in the oriented structure more than the MXD6I-12 polyamide.

### Example 3

Blends of 75 wt-% PET-co-isophthalate copolyesters, 15 wt-% PETS and 10 wt-% MXD6 were prepared. The refractive index and transparency of the isotropic films (0.2 mm thick) are set forth in table 9. The PET and PEI controls are 100 % homopolymers.

**Table 9**

| Polyester Material | Refractive Index | Transparency, % |
|---|---|---|
| PET control | 1.5735 | 92 |
| PETI-7 | 1.5735 | 90 |
| PETI-20 | 1.5735 | 90 |
| PETI-30 | 1.5735 | 90 |
| PEI control | 1.5735 | 92 |

These films were uniaxially oriented to a draw ratio of 4X. The transparency was measured in polarized and unpolarized light and the results set forth in Table 10. The PET blend is a blend of 75 wt-% PET, 15 wt-% PETS and 10 wt-% MXD6.

**Table 10**

| Materials | Unpolarized light | Polarized light | |
|---|---|---|---|
| | | // orientation | ┴ orientation |
| | T% | T% | T% |
| PET control | 89 | 89 | 88 |
| PET blend | 66 | 46 | 81 |
| PETI-7 blend | 74 | 61 | 84 |
| PETI-30 blend | 35 | 35 | 35 |

The MXD6 domain size in the PETI-7 blend was 0.1-0.3 µm, but the domain size was much larger in the PETI-30 blend due to a lower molecular weight. A similar trend was seen in biaxially oriented films, the results are set forth in Table 11.

**Table 11**

| Material | Transparency, % |
|---|---|
| PET control | 89 |
| PET blend | 70 |
| PETI-7 Blend | 81 |

By studying the refractive index of the uniaxially drawn films at different draw ratios it was found that copolymerization of PET with isophthalic acid reduced the oriented refractive index. This reduction in the mismatch (the refractive indices were closer) in oriented refractive index between the copolyester and the MXD6 explains the improvement in transparency of these blends. The Figure shows the change in refractive index in the orientation direction for PET, MXD6 and PETI-20 films. This illustrates that copolymers of PET and PEI can have the same oriented refractive index as a polyamide such as MXD6.

### Example 4

Blends of 75 wt-% PET-block-isophthalate copolyesters, 15 wt-% PETS and 10 wt-% MXD6 were prepared. The refractive index and transparency of the isotropic films (0.2 mm thick) are set forth in table 12. The PET and PEI controls are 100 % homopolymers. The PET blend is a blend of 75 wt-% PET, 15 wt-% PETS and 10 wt-% MXD6.

**Table 12**

| Polyester Material | Refractive Index | Transparency, % |
|---|---|---|
| PET control | 1.5735 | 92 |
| PETS-15UB | 1.5735 | 90 |
| PETI-20B | 1.5735 | 90 |
| PETI-25B | 1.5735 | 90 |
| PETI-30 | 1.5735 | 90 |
| PEI control | 1.5735 | 92 |

These films were uniaxially oriented to a draw ratio of 4X. The transparency was measured in polarized and unpolarized light and the results set forth in Table 13.

**Table 13**

| Materials | Unpolarized light | Polarized light | |
|---|---|---|---|
| | | // orientation | ┴ orientation |
| | T% | T% | T% |
| PET control | 89 | 89 | 88 |
| PET blend | 66 | 46 | 81 |
| PETI-15B blend | 76 | 71 | 84 |
| PETI-20B blend | 80 | 77 | 85 |
| PETI-25B blend | 79 | 73 | 84 |
| PETI-30 blend | 75 | 70 | 79 |

The transparency of the PETI-20B blend approached that of a pure PET film, and in all cases the blends of the block copolyesters with isophthalic acid were more transparent than blends with PET. This is due to a matching of the oriented refractive index of the copolyester with that of the polyamide. A similar trend was seen in biaxially oriented films, the results are set forth in Table 14.

**Table 14**

| Materials | Unpolarized light | Polarized light | |
|---|---|---|---|
| | | // orientation | ┴ orientation |
| | T% | T% | T% |
| PET control | 89 | 89 | 88 |
| PET blend | 70 | 72 | 66 |
| PETI-15B blend | 85 | 84 | 84 |
| PETI-20B blend | 84 | 84 | 85 |
| PETI-25B blend | 83 | 82 | 82 |
| PETI-30 blend | 79 | 78 | 78 |

### Example 5

12 oz. Bottles with a stretch ratio of 2.5 x 4.0 (axial and linear) were prepared with 5 wt-% MXD6 blended with a copolyester containing 1.9 wt-% 5-sulfoisophthalic acid (SIPA), and a blend of the same copolyester with the block copolyester containing 7 wt% PEI (PETI-7B). The bottle sidewall transparency and haze were measured and compared to a PET control, and the results set forth in Table 15.

**Table 15**

| Sample | Composition, Wt % | | | Transparency, % | Haze, % |
|---|---|---|---|---|---|
| | IPA | SIPA | MXD6 | | |
| PET control | 0 | 0 | 0 | 93 | 5.9 |
| PETS | 0 | 1.9 | 5 | 78 | 9.0 |
| PETI-7B | 7.1 | 1.9 | 5 | 87 | 7.6 |

Incorporation of the isophthalic acid improved the transparency and haze of the bottles.

Thus it is apparent that there has been provided, in accordance with the invention, an oriented container and a process that fully satisfied the objects, aims and advantages set forth above. While the invention has been described in conjunction with specific embodiments thereof, it is evident that many alternatives, modifications and variations will be apparent to those skilled in the art in light of the foregoing description. Accordingly, it is intended to embrace all such alternatives, modifications and variations as fall within the spirit and broad scope of the appended claims.

## Claims

1. An oriented article comprising a blend of copolyester and polyamide in which the refractive index difference between said copolyester and said polyamide is less than 0.01, wherein said refractive index difference is the difference in the oriented refractive indices of said copolymer and said polyamide.

2. The oriented article of claim 1, wherein said copolyester includes an ionic compatibilizer present in a range from about 0.1 to about 2.0 mol-% of said blend.

3. The oriented article of claim 2, wherein said ionic compatibilizer is a copolyester containing a metal sulfonate salt.

4. The oriented article of claim 3, wherein said metal ion of the sulfonate salt may be Na+, Li+, K+, Zn++, Mn++, and Ca++.

5. The oriented article of claim 4, wherein said sulfonate salt group is attached to an aromatic acid nucleus or the ester equivalent selected from the group of benzene, naphthalene, diphenyl, oxydiphenyl, sulfonyldiphenyl, or methylenediphenyl nucleus.

6. The oriented article of claim 5, wherein said aromatic acid nucleus or the ester equivalent is sulfophthalic acid, sulfoterephthalic acid, sulfoisophthalic acid, 4-sulfonaphthalene-2,7-dicarboxylic acid, and their esters.

7. The oriented article of claim 2, wherein said ionic compatibilizer is 5-sodiumsulfoisophthalic acid or 5-zincsulfoisophthalic acid, or their dialkyl esters such as the dimethyl ester (SIM) and glycol ester (SIPEG).

8. The oriented article of claim 2, further including a cobalt salt as a catalyst, wherein said cobalt salt is present in a range from about 20 to about 500 ppm of said blend:

9. The oriented article of claim 8, wherein said cobalt salt is selected form the class of cobalt acetate, cobalt carbonate, cobalt chloride, cobalt hydroxide, cobalt naphthenate, cobalt oleate, cobalt linoleate, cobalt octoate, cobalt stearate, cobalt nitrate, cobalt phosphate, cobalt sulfate, cobalt (ethylene glycolate), or mixtures of two or more of these.

10. The oriented article of claim 1, wherein said copolyester comprises polyethylene terephthalate and polyethylene 5-sodium isophthalate.

11. The oriented article of claim 1, wherein said copolyester is a block copolymer.

12. The oriented article of claim 1, wherein said polyamide is partially aromatic.

13. The oriented article of claim 1, wherein said polyamide is poly(m-xylylene adipamide).

14. The oriented article of claim 1, wherein said article has a reduced gas barrier compared with PET.

15. The oriented article of claim 1, wherein said article has less haze and is more transparent compared with an article comprising a blend of polyester and polyamide with a refractive index greater than 0.01.

16. The oriented article of claim 1, wherein said article is a film.

17. The oriented article of claim 1, wherein said article is a container.

18. A method of making an oriented article by: blending copolyester and polyamide, in which the refractive index difference between said copolyester and said polyamide is less than 0.01 wherein said refractive index difference is the difference in the oriented refractive indices of said copolymer and said polyamide, extruding an unoriented article from said blend; and stretching said unoriented article to orient it.

19. The method of claim 18, wherein said oriented article is oriented film.

20. The method of claim 19, wherein said extruding step is extruding said blend through a slot thereby forming a molten film and quickly cooling said extruded film.

21. The method of claim 20, wherein said stretching step is a uniaxial stretch orientation of said extruded film.

22. The method of claim 20, wherein said stretching step is a biaxial stretch orientation of said extruded film.

23. The method of claim 18, wherein said extruding step comprises injecting said blend into an injection molding apparatus thereby forming a preform as the unoriented article.

24. The method of claim 23, wherein said step of stretching is stretch blow molding said preform into said oriented container.

## Patentansprüche

1. Orientierter Artikel, der ein Gemisch aus Copolyester und Polyamid aufweist, in dem die Brechungsindexdifferenz zwischen dem Copolyester und dem Polyamid kleiner als 0,01 ist, wobei die Breohungsindexdifferenz die Differenz zwischen den orientierten Brechungsindizes des Copolyesters und des Polyamids ist.

2. Orientierter Artikel nach Anspruch 1, wobei der Copolyester einen ionischen Kompatibilisator enthält, der in einer Konzentration im Bereich von etwa 0,1 bis etwa 2,0 Mol-% des Gemischs anwesend ist.

3. Orientierter Artikel nach Anspruch 2, wobei der ionische Kompatibilisator ein Copolyester ist, der ein Metallsulfonatsalz enthält.

4. Orientierter Artikel nach Anspruch 3, wobei das Metallion des Sulfonatsalzes Na⁺, Li⁺, K⁺, Zn⁺⁺, Mn⁺⁺ und Ca⁺⁺ sein kann.

5. Orientierter Artikel nach Anspruch 4, wobei die Sulfonatsatz-Gruppe an einen aromatischen Säurekern oder dessen Ester-Äquivalent gebunden ist, der (das) aus der Gruppe ausgewählt ist, die aus einem Benzol-, Napthtalin-, Diphenyl-, Oxydiphenyl-, Sulfonyldiphenyl- oder Methylendiphenyl-Kem besteht.

6. Orientierter Artikel nach Anspruch 5, wobei der aromatische Säurekern oder dessen Ester-Äquivalent Sulfophthalsäure, Sulfoterephthalsäure, Sulfoisophtlialsäure, 4-Sulfonaphthalin-2,7-diearbonsäure oder einer ihrer Ester ist.

7. Orientierter Artikel nach Anspruch 2, wobei der ionische Kompatibilisator 5-Natriumsulfoisophthalsäure oder 5-Zinksulfoisophthalsäure oder einer ihrer Dialkylester ist, wie z. B. der Dimethylester (SIM) und der Glycolester (SIPEG).

8. Orientierter Artikel nach Anspruch 2, der ferner ein Cobaltsalz als Katalysator enthält, wobei das Cobaltsalz in einer Konzentration im Bereich von etwa 20 bis etwa 500 ppm des Gemischs anwesend ist.

9. Orientierter Artikel nach Anspruch 8, wobei das Cobaltsalz aus der Klasse ausgewählt ist, die aus Cobaltacetat, Cobaltcarbonat, Cobaltchlorid, Cobalthydroxid, Cobaltnaphthenat, Cobaltoleat, Cobaltlinoleat, Cobattoctoat. Cobaltstearat, Cobaltnitrat, Cobaltphosphat, Cobaltsulfat, Cobalt(ethylenglycolat) und Gemischen von zwei oder mehreren dieser Salze besteht.

10. Orientierter Artikel nach Anspruch 1, wobei der Copolyester Polyethylenterephthalat und Polyethylen-5-natriumisophthalat aufweist.

11. Orientierter Artikel nach Anspruch 1, wobei der Copolyester ein Blockcopolymer ist.

12. Orientierter Artikel nach Anspruch 1, wobei das Polyamid teilaromatisch ist.

13. Orientierter Artikel nach Anspruch 1, wobei das Polyamid Poly(m-xylylenadipamid) ist.

14. Orientierter Artikel nach Anspruch 1, wobei der Artikel im Vergleich zu PET eine reduzierte Gasbarriere aufweist.

15. Orientierter Artikel nach Anspruch 1, wobei der Artikel im Vergleich zu einem Artikel, der ein Gemisch aus Polyester und Polyamid mit einem Brechungsindex von mehr als 0,01 aufweist, eine geringere Trübung aufweist und durchsichtiger ist.

16. Orientierter Artikel nach Anspruch 1, wobei der Artikel ein Film ist.

17. Orientierter Artikel nach Anspruch 1, wobei der Artikel ein Behälter ist.

18. Verfahren zur Flerstellung eines orientierten Artikels durch Vermischen von Copolyester und Polyamid, in dem die Brechungsindexdifferenz zwischen dem Copolyester und dem Polyamid kleiner als 0,01 ist, wobei die Brechungsindexdifferenz die Differenz zwischen den orientierten Brechungsindizes des Copalyesters und des Polyamids ist; Extrudieren eines nicht orientierten Artikels aus dem Gemisch und Strecken des nicht orientierten Artikels, um ihn zu orientieren.

19. Verfahren nach Anspruch 18, wobei der orientierte Artikel ein orientierter Film ist.

20. Verfahren nach Anspruch 19, wobei der Extrusionsschritt darin besteht, dass das Gemisch durch einen Schlitz extrudiert wird, wodurch ein geschmolzener Film geformt wird, und der extrudiert Film schnell abgekühlt wird.

21. Verfahren nach Anspruch 20, wobei der Streckschritt eine Orientierung durch einachsiges Strecken des extrudierten Films ist.

22. Verfahren nach Anspruch 20, wobei der Strecksehritt eine Orientierung durch zweiachsiges Strecken des extrudierten Films ist.

23. Verfahren nach Anspruch 18, wobei der Extrusionsschritt das Einspritzen des Gemischs in eine Spritzgießvorrichtung aufweist, wodurch ein Vorformling als nicht orientierter Artikel geformt wird,

24. Verfahren nach Anspruch 23, wobei der Streckschritt das Streckblasformen des Vorformlings zu dem orientierten Behälter beinhaltet.

## Revendications

1. Article orienté comprenant un mélange de copolyester et de polyamide dans lequel la différence d'indices de réfraction entre ledit copolyestet et ledit polyamide est inférieure à 0,01, dans lequel ladite différence d'indices de réfraction est la différence des indices de réfraction orientés dudit copolymère et dudit polyamide.

2. Article orienté selon la revendication 1, dans lequel ledit copolyester inclut un agent de compatibilité ionique présent dans un intervalle d'environ 0,1 à environ 2,0% en moles dudit mélange.

3. Article orienté selon la revendication 2, dans lequel ledit agent de compatibilité ionique est un copolyester contenant un sel de sulfonate métallique.

4. Article orienté selon la revendication 3, dans lequel ledit ion métallique du sel de sulfonate peut être Na⁺, Li⁺, K⁺, Zn⁺⁺, Mn++ et Ca⁺⁺,

5. Article orienté selon la revendication 4, dans lequel ledit groupe de sel de sulfonate est attaché à un noyau d'acide aromatique ou l'ester équivalent choisi dans le groupe d'un noyau de benzène, de naphtalène, de diphényle, d'oxydiphényle, de sulfonyldiphényle ou de méthylènediphényle,

6. Article orienté selon la revendication 5, dans lequel ledit noyau d'acide aromatique ou l'ester équivalent est l'acide sulfophtalique, l'acide sulfotéréphtalique, l'acide sulfoisophtalique, l'acide 4-sulfonaphtalène-2,7-dicarboxylique et leurs esters.

7. Article orienté selon la revendication 2, dans lequel ledit agent de compatibilité ionique est l'acide 5-sodiumsulfoisophtalique ou l'acide 5-zmesulfoisophtatique ou leurs esters de dialkyle tels que l'ester de diméthyle (SIM) et l'ester de glycol (SIPEG).

8. Article orienté selon la revendication 2, incluant en outre un sel de cobalt en tant que catalyseur, dans lequel ledit sel de cobalt est présent dans une concentration d'environ 20 à environ 500 ppm dudit mélange.

9. Article orienté selon la revendication 8, dans lequel ledit sel de cobalt est choisi dans la classe d'acétate de cobalt, de carbonate de cobalt, de chlorure de cobalt, d'hydroxyde de cobalt, de naphténate de cobalt, d'oléate de cobalt, de linoléate de cobalt, d'octoate de cobalt, de stéarate de cobalt, de nitrate de cobalt, de phosphate de cobalt, de sulfate de cobalt, d'(éthylène glycolate) de cobalt ou de mélanges de deux ou plus de ceux-ci.

10. Article orienté selon la revendication 1, dans lequel ledit copolyester comprend le polyéthylène téréphtalate et le polyéthylène 5-sodium isophtalate.

11. Article orienté selon la revendication 1, dans lequel ledit copolyester est un copolymère bloc.

12. Article orienté selon la revendication 1, dans lequel ledit polyamide est partiellement aromatique.

13. Article orienté selon la revendication 1, dans lequel ledit polyamide est le poly(m-xylylène adipamide).

14. Article orienté selon la revendication 1, où ledit article présente une barrière de gaz réduite comparée à celle de PET.

15. Article orienté selon la revendication 1, où ledit article présente un faible trouble et il est plus transparent comparé à un article comprenant un mélange de polyester et de polyamide avec un indice de réfraction supérieur à 0,01.

16. Article orienté selon la revendication 1, où ledit article est un film.

17. Article orienté selon la revendication 1, où ledit article est un récipient.

18. Procédé pour la fabrication d'un article orienté par: le mélange d'un copolyester et d'un polyamide, dans lequel la différence d'indices de réfraction entre ledit copolyester et ledit polyamide est inférieure à 0,01, dans lequel ladite différence d'indices de réfraction est la différence des indices de réfraction orientés dudit copolymère et dudit polyamide; l'extrusion d'un article non orienté à partir dudit mélange; et l'étirage dudit article non orienté pour l'orienter.

19. Procédé selon la revendication 18, dans lequel ledit article orienté est un film orienté.

20. Procédé selon la revendication 19, dans lequel ladite étape d'extrusion est l'extrusion dudit mélange à travers une fente formant ainsi un film fondu et le refroidissement rapide dudit film extrudé.

21. Procédé selon la revendication 20, dans lequel ladite étape d'étirage est une orientation par étirage uniaxial dudit film extrudé.

22. Procédé selon la revendication 20, dans lequel ladite étape d'étirage est une orientation par étirage biaxial dudit film extrudé,

23. Procédé selon la revendication 18, dans lequel ladite étape d'extrusion comprend l'injection dudit mélange dans un appareil de moulage par injection formant ainsi une préforme en tant qu'article non orienté.

24. Procédé selon la revendication 23, dans lequel ladite étape d'étirage est le moulage par étirage-soufflage de ladite préforme en ledit récipient orienté.
